# EUROPÄISCHE PATENTSCHRIFT

(11) **EP 3 515 659 B1**
(45) Veröffentlichungstag und Bekanntmachung des Hinweises auf die Patenterteilung: **10.08.2022**
(21) Anmeldenummer: 17794652.2
(22) Anmeldetag: 21.09.2017
(51) Int. Cl.: B23Q 1/28, F16C 29/00, F16C 29/10

(54) **KLEMMVORRICHTUNGSREIHENSCHALTUNG**
CLAMPING DEVICE SERIES CONNECTION
MONTAGE EN SÉRIE D'UN DISPOSITIF DE SERRAGE

(30) Priorität: 24.09.2016 DE 102016011501
(43) Veröffentlichungstag der Anmeldung: 31.07.2019
(73) Patentinhaber: Zimmer, Martin, 77866 Rheinau (DE); Zimmer, Günther, 77866 Rheinau (DE)
(72) Erfinder: ZIMMER, Martin, 77866 Rheinau (DE); ZIMMER, Günther, 77866 Rheinau (DE)
(74) Vertreter: Thämer, Wolfgang
(86) Internationale Anmeldenummer: PCT/DE2017/000313
(87) Internationale Veröffentlichungsnummer: WO 2018/054409

(56) Entgegenhaltungen:
- DE-C- 643 280
- GB-A- 635 998
- JP-A- 58 106 221
- JP-A- S50 127 279

## Beschreibung

Die Erfindung betrifft ein manuelles Klemmsystem für auf Führungsschienen gelagerte Schlitten aus mindestens zwei hintereinander angeordneten Klemmvorrichtungen, wobei jede Klemmvorrichtung mindestens zwei Klemmelemente aufweist, die jeweils mittels einer Betätigungswelle gegeneinander zum Klemmen einer einzelnen Führungsschiene verspannbar sind.

Um einen Schlitten auf zwei Schienen eines Maschinenbetts zu klemmen, wird in der Regel nur eine manuelle Klemmung verwendet.

Aus der GB 635 998 A ist eine Vorrichtung bekannt, mit deren Hilfe ein Maschinenschlitten auf dem ihn führenden Maschinenbett festgeklemmt werden kann. Dazu befinden sich zwischen den Führungen des Maschinenschlittens zwei Klemmvorrichtungen. Jede Klemmvorrichtung weist einen Haken auf, der über ein betätigbares Keilgetriebe den Maschinenschlitten gegen das Maschinenbett zum Klemmen ziehen kann. Am Keil eines jeden Keilgetriebes ist jeweils ein Gewinde angeordnet. Beide Gewinde, die zudem geläufig sind, sind in die Enden einer mit einem Stirnrad ausgestatteten Zwischenwelle eingeschraubt. Parallel zur Zwischenwelle ist eine mittels eines Bedienhebels verstellbare Betätigungswelle angeordnet, die über ein Antriebsstirnrad mit dem Stirnrad der Zwischenwelle kämmt.

Der vorliegenden Erfindung liegt die Problemstellung zugrunde, ein Klemmsystem zu entwickeln, mit dem sich ein Schlitten bei geringem Platzbedarf an mindestens zwei Führungsschienen einfach, sicher und wartungsfrei klemmen lässt und zudem nur wenige verschiedene Bauteile benötigt.

Diese Problemstellung wird mit den Merkmalen des Hauptanspruchs gelöst. Dabei sind die einander zugewandten Enden der Betätigungswellen mittels einer drehstarren Schnittstelle form- oder kraftschlüssig verbunden.

Mit der Erfindung wird aus mehreren bekannten manuellen Klemmvorrichtungen ein Klemmsystem geschaffen, das beispielsweise auf einer mit einer Pinole ausgestatteten Drehmaschine die Pinole am Maschinenbett sicher festklemmen kann. Dazu wird jede der beiden maschinenbettseitigen Führungsschienen von einer manuellen Klemmvorrichtung umgriffen. Dazu wird ein Teil der Betätigungswellen der Klemmvorrichtungen verlängert. Zugleich werden die einander zugewandten Enden der Klemmvorrichtungen über eine drehstarre Schnittstelle miteinander verbunden. Trotz der formsteifen Schnittstelle bleibt die präzise Einstellbarkeit jeder einzelnen Klemmvorrichtung erhalten, so dass sich durch eine Betätigung des Klemmsystems mit nur einem Handhebel die Pinole an beiden Führungsschienen mit gleicher oder zumindest nahezu gleicher Klemmkraft anlegen lässt.

Die Führungsschienen können parallel zueinander geradlinig verlaufen. Es ist aber auch denkbar, dass die Führungsschienen bereichsweise Abschnitte aufweisen, die Teile zweier konzentrischer Kreise darstellen.

Weitere Einzelheiten der Erfindung ergeben sich aus den Unteransprüchen
- Figur 1:: perspektivische Ansicht einer Reihenschaltung zweier manueller Klemmvorrichtungen;
- Figur 2:: Reihenschaltung aus Figur 1 in einem Pinolengehäuse;
- Figur 3:: perspektivische Ansicht einer manuellen Klemmvorrichtung;
- Figur 4:: Schnitt einer manuellen Klemmvorrichtung;
- Figur 5:: perspektivische Ansicht des Grundkörpers einer manuellen Klemmvorrichtung;
- Figur 6:: Längsschnitt der gesamten Klemmvorrichtung;
- Figur 7:: perspektivische Ansicht der einander gegenüberliegenden Enden der beiden Betätigungswellen;
- Figur 8:: Teillängsschnitt der hinteren Klemmvorrichtung mit hydraulischem Spanndorn an der Betätigungswelle;
- Figur 9:: Teillängsschnitt der hinteren Klemmvorrichtung und Kupplung mit integriertem hydraulischen Spanndorn.

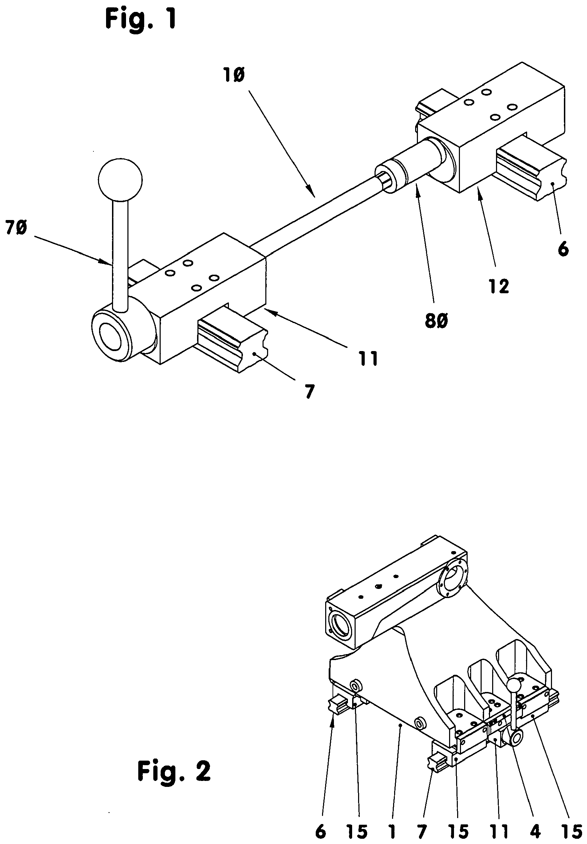

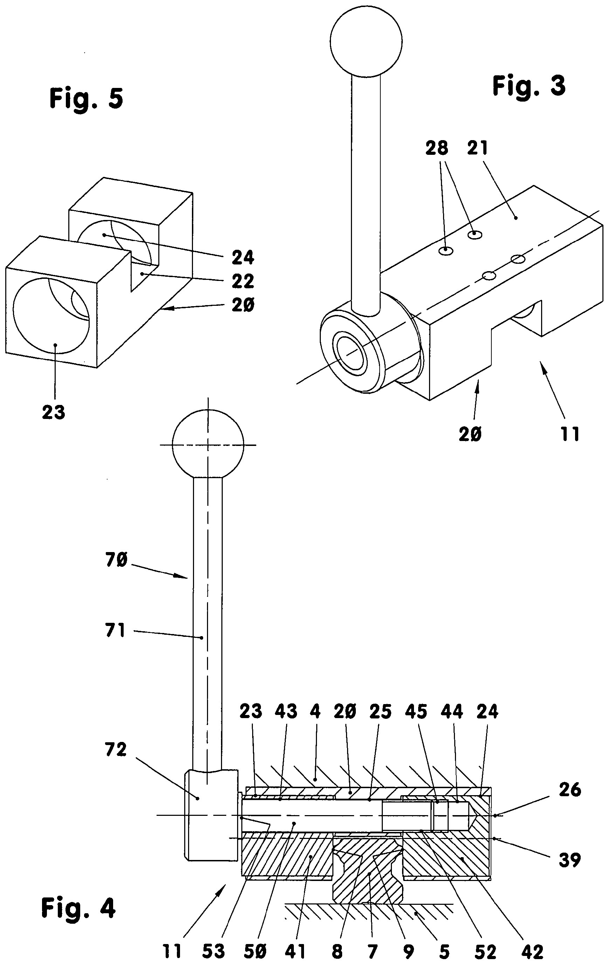

Die Figuren 1 bis 9 zeigen ein manuelles Klemmsystem (10) zum Festklemmen einer Pinole auf dem Maschinenbett (5) einer Werkzeugmaschine. Die Pinole (1) bzw. das Pinolengehäuse, vgl. Figur 2, ist z.B. über vier Führungswagen (15) auf zwei am Maschinenbett (5), vgl. Figur 4, befestigten Führungsschienen (6, 7) geradgeführt gelagert. Je eine manuelle Klemmvorrichtung (11, 12) umfasst mit Hilfe von zwei Klemmbacken (41, 42) eine Führungsschiene (6, 7). Beide hintereinander angeordneten Klemmvorrichtungen (11, 12) sind über eine mechanische Schnittstelle (80, 90) miteinander gekoppelt.

Nach Figur 4 liegt der Grundkörper (20) über seine Oberseite (21) an der Unterseite der Pinole (1) über ein Zwischenelement (4), vgl. Figur 2, an. Das Zwischenelement (4) ist mit dem Grundkörper (20) verschraubt. Die entsprechenden Schrauben fixieren das Zwischenelement (4) mittels der Gewindebohrungen (28) am Grundkörper (20). Letzterer umgreift die Führungsschiene (6, 7).

Die Führungsschiene (6, 7) besteht nach dem Ausführungsbeispiel aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche z.B. das sie tragende Maschinenbett (5). Die Führungsschiene (7) hat oberhalb der v-förmigen Nut u.a. zwei Nebenflächen (8, 9), die sich bezogen auf die vertikale Mittenlängsebene spiegelbildlich gegenüberliegen. Beide Nebenflächen (8, 9) sind zueinander parallel ausgerichtet. Sie dienen der einzelnen Klemmvorrichtung als Anlageflächen für die Klemmbacken (41, 42).

Die Figuren 3 bis 5 zeigen eine einzelne manuelle Klemmvorrichtung (11), um deren Funktion zu beschreiben. Die Klemmvorrichtung (11) hat z.B. einen im Wesentlichen quaderförmigen, z.B. einteiligen Grundkörper (20), der in der Regel aus einem metallischen Werkstoff gefertigt ist. Hier hat der Grundkörper (20) als Werkstoff den Einsatzstahl 16 MnCr 5. Im Ausführungsbeispiel misst der Grundkörper (20) 120mm x 48mm x 46mm. An seiner Oberseite (21) weist er beispielsweise vier Gewindebohrungen (28) für die Montage an dem Pinolengehäuse (1) auf. Mittig hat er nach Figur 5 eine Nut (22) mit rechteckigem Querschnitt. Sie hat bei einer Nuttiefe von 22 mm eine Breite von 35 mm. In jede Stirnseite des Grundkörpers (20) ist eine Klemmbackensacklochbohrung (23, 24) eingearbeitet. Ihr Durchmesser beträgt bei einer einer Bohrungstiefe von 44 mm z.B. 40 mm. Die koaxialen Klemmbackensacklochbohrungen (23, 24) reichen somit in die Nut (22) hinein. Ihre Mittellinien liegen auf einer vertikalen Mittenlängsebene. Letztere ist die Schnittebene aus Figur 4. Die Mittellinien sind von der Oberseite (21) z.B. 25 mm entfernt.

Die beiden Klemmbackensacklochbohrungen (23, 24) sind über eine Durchgangsbohrung (25) miteinander verbunden. Deren Mittellinie (26) liegt ebenfalls in der vertikalen Mittenlängsebene. Sie ist von der Oberseite (21) z.B. 14 mm entfernt. Die Oberseite (21) weist im mittleren, über der Nut (22) gelegenen Bereich die Gewindebohrungen (28) auf.

In jeder Klemmbackensacklochbohrung (23, 24) sitzt ein z.B. zylinderförmiger Klemmbacken (41, 42), mit z.B. planen Stirnseiten, die zudem normal zur Mittellinie des jeweiligen Klemmbackens (41, 42) orientiert sind. Der einzelne z.B. aus Ck45 gefertigte Klemmbacken (41, 42) hat im Ausführungsbeispiel bei einer Länge von 42 mm einen Durchmesser von 40 mm. Der erste bzw. vordere Klemmbacken (41) hat eine Durchgangsbohrung (43), deren Durchmesser 16,5 mm beträgt. Der zweite bzw. hintere Klemmbacken (42) weist anstelle einer Durchgangsbohrung eine Gewindesacklochbohrung (44) auf. Das Gewinde (45) ist hier nur beispielsweise ein M16 x 1-Linksgewinde. Seine nutzbare Tiefe beträgt z.B. 20 mm.

Im montierten Zustand der Klemmvorrichtung (11) fluchten die Durchgangsbohrung (43) und die Gewindesacklochbohrung (44) der Klemmbacken (41, 42) mit der Durchgangsbohrung (25) des Grundkörpers (20).

Der einzelne Klemmbacken (41, 42) kann anstelle der planen Stirnfläche, die der Führungsschiene (6, 7) zugewandt ist, einen Stollen aufweisen, der im taillierten Bereich der Führungsschiene (6, 9) beim Klemmen zur Anlage kommt. Der taillierte Bereich ist die v-förmige Nut mit dem verbreiterten Nutgrund.

Beide Klemmbacken (41, 42) werden mittels einer Betätigungswelle (50) gegeneinander gespannt. Dazu hat die z.B. aus dem Weichautomatenstahl 11 SMnPb 30 gefertigte Betätigungswelle (50) am einen Ende ein Spanngewinde (52) und im Bereich des anderen Endes einen Anschlagbund (53). Hinter dem Anschlagbund (53) endet die Betätigungswelle (50) mit einer kurzen Außenkerbverzahnung, auf der ein Bedienhebel mit seiner Innenkerbverzahnung - geringfügig verschiebbar - sitzt. Bei der Montage wird die Betätigungswelle (50) durch die Durchgangsbohrung (43) des ersten im Grundkörper (20) sitzenden Klemmbackens (41) hindurchgeschoben. Sie durchdringt auch die Durchgangsbohrung (25) des Grundkörpers (20) um im Feingewinde (45) des zweiten im Grundkörper (20) sitzenden Klemmbackens (42) eingeschraubt zu werden. Das Feingewinde (45) der Betätigungswelle (50) ist zur Gewährleistung einer langanhaltenden Leichtgängigkeit in der Gewindesacklochbohrung (44) mit einem Molykotefett eingepinselt. Beim Einschrauben der Betätigungswelle (50) wirkt der auf der äußeren Stirnfläche des Klemmbackens (41) aufliegende Anschlagbund (53) als Schraubenkopf.

Der auf der Betätigungswelle (50) verliersicher sitzende Bedienhebel (70) kann auf der Betätigungswelle (50) verschwenkt werden, ohne diese selbst in Rotation zu versetzen. Durch ein Verschieben des Bedienhebels (70) in Längsrichtung der Betätigungswelle (50) um z.B. 2 bis 3 Millimeter kommt dessen Innenkerbverzahnung außer Eingriff gegenüber der Außenkerbverzahnung der Betätigungswelle (50), wodurch der Bedienhebel (70) bzw. sein Adapterring (72) gegenüber der Betätigungswelle (50) frei verschwenkbar wird. Durch manuelles Einrücken - oder alternativ mittels einer Einrückfeder - lassen sich die Kerbverzahnungen der Teile (50, 72) wieder zur Drehmomentübertragung in Eingriff bringen.

Wird bei der in Figur 4 dargestellten Klemmvorrichtung (11) der Bedienhebel (70) nach vorn geschwenkt, nach Figur 3 ist diese Schwenkbewegung eine Bewegung in Uhrzeigerdrehsinn, dann bewegen sich die beiden Klemmelemente bzw. Klemmbacken (41, 42) auseinander, da sich das Spanngewinde (52) der Betätigungswelle (50) aus der Gewindesacklochbohrung (44) des Klemmbackens (42) herausschraubt. Zwischen dem Klemmen und dem vollständigen Öffnen der Klemmvorrichtung wird der Bedienhebel (70) um maximal 110 Winkelgrade geschwenkt. Die vorgesehene Klemmkraft liegt bei 5000 N.

Nach den Figuren 1 und 2 sind zwei Klemmvorrichtungen (11, 12) zu einem manuell spannbaren Klemmsystem (10) hintereinander angeordnet. Jede Klemmvorrichtung (11, 12) umfasst dabei zumindest bereichsweise eine Führungsschiene (6, 7). Beide Führungsschienen (6, 7) sind zueinander parallel ausgerichtet. Sie sind starr auf einem gemeinsamen Maschinenbett (5), vgl. Figur 4, verschraubt. Das Klemmsystem (10) sitzt somit in einem schmalen Bauraum, der nach unten durch das Maschinenbett (5) und nach oben durch die als Schlitten ausgebildete Pinole (1) begrenzt wird. Entlang der jeweiligen Führungsschiene (6, 7) sitzt die einzelne Klemmvorrichtung (11, 12) z.B. mittig zwischen zwei Führungswagen (15). Die Führungswagen (15) rollen mittels umlaufender Wälzkörper an der jeweiligen Führungsschiene (6, 7) geradgeführt entlang.

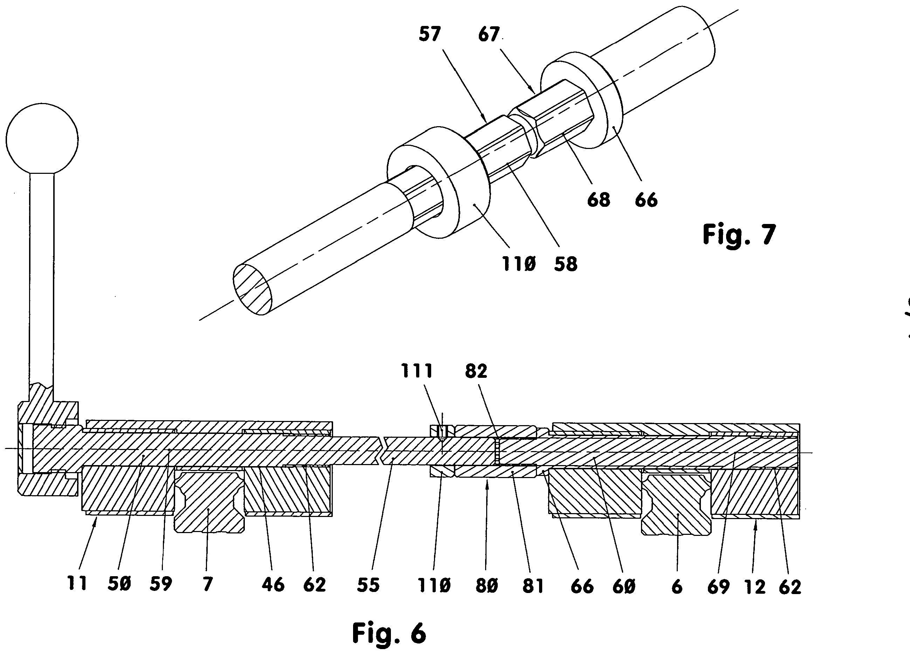

Die erste Klemmvorrichtung (11) aus den Figuren 1 und 6 unterscheidet sich von der in den Figuren 3 und 4 dargestellten Variante zum einem dadurch, dass die Gewindesacklochbohrung (44) als Durchgangsgewindebohrung (46) ausgebildet ist und zum anderen dadurch, dass die erste Betätigungswelle (50) über das bisherige Gewindeende hinaus um z.B. 182 mm verlängert ist. Der Durchmesser des außerhalb des Grundkörpers (20) gelegenen Kopplungsabschnitt (55) ist kleiner als der Kerndurchmesser des Spanngewindes (52) der Betätigungswelle (50). Der Kopplungsabschnitt (55) endet in einem Mitnahmeprofil.

Die zweite Klemmvorrichtung (12) aus den Figuren 1 und 6 unterscheidet sich primär von der in den Figuren 3 und 4 dargestellten Variante durch das Fehlen des Bedienhebels (70) und der für diesen erforderlichen Anpasskonstruktion. Stattdessen hat die zweite Betätigungswelle (60) einen Anschlagflansch (65) und ein davorliegendes Mitnahmeprofil.

Die zwischen den beiden Betätigungswellen (50, 60) angeordnete Schnittstelle (80) ist z.B. eine nichtschaltbare, drehstarre Hülsenkupplung. Sie ist nach den Figuren 6 und 7 ein zylindrischer Rohrkörper (81), der in Längsrichtung eine zentrale durchgehende Ausnehmung (82) aufweist. Der Querschnitt der Ausnehmung (82), der mit den Querschnitten der miteinander zu kuppelnden Enden (57, 67) der Betätigungswellen (50, 60) korrespondiert, ist im Ausführungsbeispiel sechskantförmig gestaltet. Alternativ können diese Querschnitte auch keilwellen-, zahnwellen, kerbwellen- oder polygonwellenförmig gestaltet sein. Auch beliebige andere zur Mittellinie (59, 69) unsymmetrische Querschnitte sind denkbar.

Nach Figur 7 haben die beiden Wellenenden (57, 67) jeweils ein Sechskantprofil (58, 68). Der Rohrkörper (81) hat allerdings eine Ausnehmung (82), die ein 12-Kantprofil aufweist. Auf diese Weise kann der Verdrehwinkel zwischen den beiden Betätigungswellen (50, 60) anstatt in 60-Winkelgradschritten in 30-Winkelgradschritten variiert werden.

Nach Figur 6 sitzt die Betätigungswelle (60) gegenüber der Betätigungswelle (50) um 30 Winkelgrade verschwenkt montiert. Der drehstarr kuppelnde Rohrkörper (81) liegt mit seiner rechten Stirnfläche am Anschlagflansch (66) der Betätigungswelle (60) an. Die linke Stirnfläche des Rohrkörpers (81) stützt sich an einem Anschlagring (110) ab, der auf dem Sechskantprofil (58) mit Hilfe eines Gewindestifts (111) fixiert ist.

Figur 7 zeigt die beiden Wellenenden (57, 67) ohne den Rohrkörper (81). Beide Sechskantprofile (58, 68) sind hier deckungsgleich dargestellt. Auf dem vorderen Profil (58) ist der Anschlagring (100) positioniert. Bei der Bauart nach den Figuren 6 und 7 werden zum Justieren des Klemmsystems (10) die Klemmvorrichtungen (11, 12) einzeln an ihrer Führungsschiene (6) oder (7) eingestellt. Beispielsweise wird dazu bei jeder Klemmvorrichtung eine vorgebbare Klemmkraft eingestellt. Die Einstellung erfolgt indirekt durch Messung des an der jeweiligen Betätigungswelle anlegbaren Drehmoments oder ebenfalls indirekt durch Messen der Haltekraft entlang der Führungsrichtung, die sich zu Beginn des Losbrechens des Schlittens (1) beim Übergang von der Haftreibung auf die Gleitreibung einstellt hat. Ggf. kann die Klemmkraft auch direkt mittel eine Kraftmessdose eingestellt werden.

Sind für beide Klemmvorrichtungen (11, 12) die Klemmkräfte eingestellt, wird der Rohrkörper (81) über beide Mitnahmeprofile (58, 68) geschoben. Lässt sich der Rohrkörper (81) von der Betätigungswelle (50) aus nicht auf die Betätigungswelle (60) aufschieben, wird entschieden, ob bei der ersten (11) oder der zweiten Klemmvorrichtung (12) eine höhere Klemmkraft eingestellt werden soll. Dazu wird die zweite Betätigungswelle (60) entweder um 0 bis 30 Winkelgrade nach rechts oder nach links solange verdreht, bis sich der Rohrkörper (81) über beide Wellenenden (57, 58) schieben lässt.

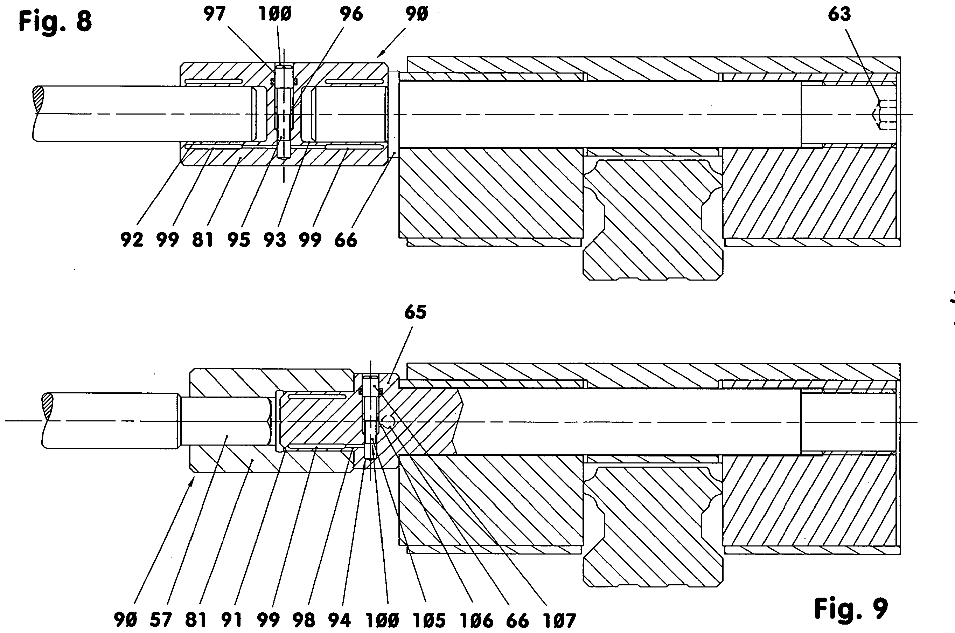

Sind für beide Klemmvorrichtungen (11, 12) nahezu gleiche Klemmkräfte zwingend erforderlich, wird eines der in den Figuren 7 und 8 auszugsweise dargestellten Klemmsysteme vorgeschlagen. In Figur 7 wird eine Betätigungswelle (60) gezeigt, deren kuppelndes Wellenende (67) als hydraulischer Spanndorn gestaltet ist. Zugleich wird hierfür der Rohrkörper (81) der Schnittstelle (90) angepasst.

An der Betätigungswelle (60) wird der Anlageflansch (66) soweit verbreitert, dass er problemlos einen Verdrängerzapfen (100) und mehrere am Umfang des Anlageflansches (65) verteilte Mitnahmebohrungen (66) aufnehmen kann. Letztere dienen dem Verdrehen der Betätigungswelle (60).

Das Ende (67) der Betätigungswelle (60) wird vor dem Anlageflansch (65) zylindrisch ausgebildet. Es ist feinbearbeitet.

Der Verdrängerzapfen (100) sitzt als Teil des hydraulischen Spanndorns in einer quer zur Mittellinie (69) gelegenen Stufenbohrung (94). Die Stufenbohrung (94) hat einen Verdrängerabschnitt (95), einen Gewindeabschnitt (96) und einen Dichtabschnitt (97). Der Verdrängerzapfen (100) sitzt mit seinem zylindrischen Betätigungszapfen (107) im Dichtabschnitt (97) der Stufenbohrung (94). Gegenüber dem Dichtabschnitt (97) ist er mittels eines Dichtrings abgedichtet. Der Betätigungszapfen (97) geht in einen Verdrängerbolzen (105) über, der in der Verdrängerzapfenmitte ein im Gewindeabschnitt (96) der Stufenbohrung (94) sich abstützendes Gewinde (106) aufweist.

Die Stufenbohrung (94) ist im unteren Bereich durch eine z.B. parallel zur Mittellinie (69) verlaufende Bohrung (98) mit einem Ringkanal (99) verbunden, der im zylindrischen Ende (67) der Betätigungswelle (60) angeordnet ist. Der nur mehrere Zehntel Millimeter breite Ringkanal (99) erstreckt sich auf 70 bis 80 Prozent der Länge des zylindrischen Endes (67). Er liegt z.B. nur 0,5 bis 0,8 mm unterhalb der zylindrischen Außenfläche des Endes (67).

Zur Anpassung an den hydraulischen Spanndorn weist die rechte Hälfte des Rohrkörpers (81) eine Bohrung mit zylindrischer feinbearbeiteter Innenwandung auf. An ihr liegt bei unbetätigtem Spanndorn das zylindrisch Ende (67) der Betätigungswelle (60) mit geringem Spiel an. Durch ein Einschrauben des Verdrängerzapfens (100) in die Stufenbohrung (94) wird das in der Stufenbohrung (94) eingelagerte, z.B. zähflüssige Hydrauliköl teilweise aus dem Bohrungsbereich in den Ringkanal (99) verdrängt. Der dort ansteigende Öldruck presst die den Ringkanal (99) außen umgebende Wandung des Endes (67) so stark gegen die zylindrische Bohrung des Rohrkörpers (81), dass dieser drehsteif mit der Betätigungswelle (60) verbunden wird.

Die Figur 8 zeigt eine Variante, bei der beide Wellenenden (57, 67) zylindrisch gestaltet werden. Die beiden feinbearbeiteten Wellenenden (57, 67) sitzen in einem Rohrkörper (81), der eine hydraulische Spannhülse mit zwei getrennten Ringkanälen (99) aufweist. Der Rohrkörper (81) weist beidseitig feinbearbeitete Sacklochbohrungen (92, 93) auf, die zueinander fluchten und konzentrisch zur beispielsweise zylindrischen Außenwandung des Rohrkörpers (81) orientiert sind. Quer zwischen den Sacklochbohrungen (92, 93) befindet sich eine schon aus Figur 7 bekannte Stufenbohrung (94), in der ein ebenfalls aus Figur 7 bekannter Verdrängerzapfen (100) tiefenverstellbar sitzt. In Bereich der beiden zylindrischen Innenwandungen der Sacklochbohrungen (92, 93) befindet sich jeweils ein Ringkanal (99), der über eine separate Bohrung hydraulisch mit dem nach Figur 8 unteren Bereich der Stufenbohrung (94) in Verbindung steht.

In diesem Fall hat zum Einstellen der zweiten Betätigungswelle (60) diese an ihrer freien Stirnseite einen Innensechskant (63). Nach dem Einstellen der Klemmkräfte an beiden Klemmvorrichtungen (11, 12) wird der Verdrängerzapfen (100) in bekannter Weise zur Öldruckerhöhung und drehfesten Verbindung beider Betätigungswellen (50, 60) eingeschraubt.

### Bezugszeichenliste:

- 1: Schlitten, Pinole, Pinolengehäuse
- 4: Zwischenelement
- 5: Maschinenbett
- 6, 7: Schiene, Führungsschiene
- 8, 9: Nebenflächen

- 10: Klemmsystem, manuell
- 11, 12: Klemmvorrichtungen; vorn, hinten
- 15: Führungswagen

- 20: Grundkörper
- 21: Oberseite
- 22: Nut
- 23, 24: Klemmbackensacklochbohrung
- 25: Durchgangsbohrung
- 26: Mittellinie
- 28: Gewindebohrungen
- 29: Mittellinie

- 41: Klemmelement, Klemmbacken, vorn
- 42: Klemmelement, Klemmbacken, hinten
- 43: Durchgangsbohrung
- 44: Gewindesacklochbohrung
- 45: Gewinde, Feingewinde, Linksgewinde
- 46: Durchgangsgewindebohrung

- 50: Betätigungswelle, vorn
- 52: Spanngewinde
- 53: Anschlagbund
- 55: Kopplungsabschnitt
- 57: Ende, Wellenende
- 58: Sechskantprofil, Mitnahmeprofil
- 59: Mittellinie

- 60: Betätigungswelle, hinten
- 62: Spanngewinde
- 63: Innensechskant, Werkzeugausnehmung
- 65: Anschlagflansch
- 66: Mitnahmebohrungen, Werkzeugausnehmung
- 67: Ende, Wellenende
- 68: Sechskantprofil, Sechskantzapfen, Mitnahmeprofil
- 69: Mittellinie

- 70: Bedienhebel
- 71: Schaft
- 72: Adapterring mit Innenkerbverzahnung

- 80: Schnittstelle, Hülsenkupplung
- 81: Rohrkörper
- 82: Ausnehmung, zentral

- 90: Schnittstelle, Spanndornkupplung
- 91: Bohrung, rechts
- 92: linke Sacklochbohrung, Bohrung
- 93: rechte Sacklochbohrung, Bohrung
- 94: Stufenbohrung
- 95: Verdrängerabschnitt
- 96: Gewindeabschnitt
- 97: Dichtabschnitt
- 98: Bohrung
- 99: Ringkanal

- 100: Verdrängerzapfen, Verdrängerkörper
- 105: Verdrängerbolzen
- 106: Gewinde
- 107: Betätigungszapfen

- 110: Anschlagring
- 111: Gewindestift

## Patentansprüche

1. Manuelles Klemmsystem für Führungsschienen (6, 7) aus mindestens zwei hintereinander angeordneten Klemmvorrichtungen (11, 12), wobei jede Klemmvorrichtung mindestens zwei Klemmelemente (41, 42) aufweist, die jeweils mittels einer Betätigungswelle (50, 60) gegeneinander zum Klemmen einer einzelnen Führungsschiene (6, 7) verspannbar sind,
- wobei die einander zugewandten Enden (57, 67) der Betätigungswellen (50, 60) mittels einer drehstarren Schnittstelle (80, 90) form- oder kraftschlüssig verbunden sind.

2. Manuelles Klemmsystem gemäß Anspruch 1, **dadurch gekennzeichnet, dass** die drehstarre Schnittstelle eine Hülsenkupplung (80) ist, die einen Rohrkörper (81) aufweist.

3. Manuelles Klemmsystem gemäß Anspruch 1, **dadurch gekennzeichnet, dass** die vordere und die hintere Betätigungswelle (50, 60) jeweils ein Spanngewinde (52) aufweist.

4. Manuelles Klemmsystem gemäß Anspruch 3, **dadurch gekennzeichnet, dass** das Spanngewinde (52) ein Feingewinde ist.

5. Manuelles Klemmsystem gemäß Anspruch 3, **dadurch gekennzeichnet, dass** der Rohrkörper (81) einen Außendurchmesser hat, der kleiner ist als der zweifache Kerndurchmesser des Spanngewindes (52) der ersten Betätigungswelle (50).

6. Manuelles Klemmsystem gemäß Anspruch 2, **dadurch gekennzeichnet, dass** die in den Rohrkörper (81) eingesteckten Enden (57, 58) der Betätigungswellen (50, 60) jeweils einen gleichgroßen Querschnitt haben, der jeweils sechskantförmig ist.

7. Manuelles Klemmsystem gemäß Anspruch 6, **dadurch gekennzeichnet, dass** die Ausnehmung (82) des Rohrkörpers (81) einen Querschnitt hat, der 12-kantförmig ist, wobei die Schlüsselweite des 12-kantförmigen Querschnitts der Schlüsselweite des sechskantförmigen Querschnitts der Enden (57, 67) entspricht.

8. Manuelles Klemmsystem gemäß Anspruch 1, **dadurch gekennzeichnet, dass** der Rohrkörper (81) für jedes Ende (57, 67) der Betätigungswellen (50, 60) eine zylindrische Bohrung (92, 93) aufweist, wobei jede Bohrung (92, 93) von einer ringförmigen Hydrauliköldruckkammer (99) umgeben ist, deren Hydrauliköldruck mittels eines einschraubbaren Verdrängerkörpers (100) einstellbar ist.

## Claims

1. Manual clamping system for guide rails (6, 7) consisting of at least two successively arranged clamping devices (11, 12), wherein each clamping device comprises at least two clamping elements (41, 42), each of which can be clamped against each other by means of an actuation shaft (50, 60) for clamping a single guide rail (6, 7), wherein the ends facing each other (57, 67) of the actuation shafts (50, 60) are connected in a positive-locking or a non-positive-locking manner by means of a torsionally rigid interface (80, 90).

2. Manual clamping system according to Claim 1, **characterized in that** the torsionally rigid interface is a sleeve coupling (80) comprising a tubular body (81) .

3. Manual clamping system according to Claim 1, **characterized in that** the front and the rear actuation shaft (50, 60) each comprises a clamping screw thread (52) .

4. Manual clamping system according to Claim 3, **characterized in that** the clamping screw thread (52) is a fine thread.

5. Manual clamping system according to Claim 3, **characterized in that** the tubular body (81) has an outer diameter that is smaller than twice the core diameter of the clamping screw thread (52) of the first actuation shaft (50).

6. Manual clamping system according to Claim 2, **characterized in that** the ends (57, 58) of the actuation shafts (50, 60) inserted into the tubular body (81) each have an equal cross-section that is respectively hexagonal.

7. Manual clamping system according to Claim 6, **characterized in that** the recess (82) of the tubular body (81) has a cross-section with twelve edges, wherein the key width of the 12-edged cross-section corresponds to the key width of the hexagonal cross-section of the ends (57, 67).

8. Manual clamping system according to Claim 1, **characterized in that** the tubular body (81) comprises a cylindrical bore hole (92, 93) for each end (57, 67) of the actuation shafts (50, 60), wherein each bore hole (92, 93) is surrounded by a ring-shaped hydraulic oil pressure chamber (99), the hydraulic oil pressure of which can be adjusted by means of a screw-in displacement body (100).

## Revendications

1. Système de serrage manuel pour des rails de guidage (6, 7), composé d'au moins deux dispositifs de serrage (11, 12) placés l'un derrière l'autre, chaque dispositif de serrage comportant au moins deux éléments de serrage (41, 42), qui sont susceptibles d'être contraints chacun l'un contre l'autre au moyen d'un arbre d'actionnement (50, 60), pour le serrage d'un rail de guidage (6, 7) individuel,
- les extrémités (57, 67) qui se font face des arbres d'actionnement (50, 60) étant assemblées par complémentarité de forme ou de force au moyen d'une interface (80, 90) solidaire en rotation.

2. Système de serrage manuel selon la revendication 1, **caractérisé en ce que** l'interface solidaire en rotation est un accouplement à douille (80), qui comporte un corps tubulaire (81).

3. Système de serrage manuel selon la revendication 1, **caractérisé en ce que** l'arbre d'actionnement (50, 60) avant et arrière comportent chacun un filetage de serrage (52).

4. Système de serrage manuel selon la revendication 3, **caractérisé en ce que** le filetage de serrage (52) est un filetage fin.

5. Système de serrage manuel selon la revendication 3, **caractérisé en ce que** le corps tubulaire (81) présente un diamètre extérieur qui est inférieur au double du diamètre de fond de filet du filetage de serrage (52) du premier arbre d'actionnement (50).

6. Système de serrage manuel selon la revendication 2, **caractérisé en ce que** les extrémités (57, 58) des arbres d'actionnement (50, 60) insérées dans le corps tubulaire (81) présentent chacune une section transversale de dimensions identiques, qui est chaque fois de forme hexagonale.

7. Système de serrage manuel selon la revendication 6, **caractérisé en ce que** l'évidement (82) du corps tubulaire (81) présente une section transversale qui est à 12 pans, l'ouverture de clé de la section transversale à 12 pans correspondant à l'ouverture de la section transversale hexagonale (57, 67).

8. Système de serrage manuel selon la revendication 1, **caractérisé en ce que** le corps tubulaire (81) comporte pour chaque extrémité (57, 67) des arbres d'actionnement (50, 60) un perçage (92, 93) cylindrique, chaque perçage (92, 93) étant entouré d'une chambre de refoulement d'huile hydraulique (99), dont le moyen de refoulement d'huile hydraulique d'un corps de refoulement (100) vissable est réglable.
